# EUROPEAN PATENT SPECIFICATION

(11) **EP 3 506 735 B1**
(45) Date of publication and mention of the grant of the patent: **22.09.2021**
(21) Application number: 17845592.9
(22) Date of filing: 30.08.2017
(51) Int. Cl.: A01G 23/083, B66C 13/18, E02F 3/43

(54) **METHOD AND SYSTEM FOR CONTROLLING THE FUNCTIONS OF SET OF BOOMS, OR OF A TREE-PROCESSING DEVICE ATTACHED TO IT IN CONNECTION WITH THE FELLING OF A TREE, AS WELL AS A CORRESPONDING ARRANGEMENT AND A FORESTRY MACHINE**
VERFAHREN UND SYSTEM ZUM STEUERN DER FUNKTIONEN VON BAUMGRUPPEN ODER EINER DARAN BEFESTIGTEN BAUMBEARBEITUNGSVORRICHTUNG IM ZUSAMMENHANG MIT DEM FÄLLEN EINES BAUMES SOWIE EINE ENTSPRECHENDE ANORDNUNG UND EINE FORSTMASCHINE
PROCÉDÉ ET SYSTÈME DE COMMANDE DES FONCTIONS D'UNE FLÈCHE OU D'UN DISPOSITIF DE TRAITEMENT D'ARBRE FIXÉ À LA FLÈCHE EN RELATION AVEC L'ABATTAGE D'UN ARBRE ET AGENCEMENT CORRESPONDANT ET MACHINE DE FORESTERIE

(30) Priority: 30.08.2016 FI 20165646
(43) Date of publication of application: 10.07.2019
(73) Proprietor: Ponsse OYJ, 74200 Vieremä (FI)
(72) Inventor: KIVI, Aleksi, 74200 Vieremä (FI); SAVOLAINEN, Markku, 74200 Vieremä (FI)
(74) Representative: Kespat Oy
(86) International application number: PCT/FI2017/050609
(87) International publication number: WO 2018/042080

(56) References cited:
- EP-A1- 2 251 494
- EP-A1- 2 939 529
- EP-A1- 2 939 529
- EP-A1- 2 939 530
- EP-A1- 2 987 399
- EP-A2- 1 889 537
- EP-A2- 1 988 220
- US-A1- 2010 222 931
- US-A1- 2015 353 328
- US-A1- 2016 219 787

## Description

The method relates to a method for controlling the functions of set of booms or of a tree-processing device attached to it, in connection with the event of felling a tree, in which method
- determining and/or estimating the attitude or state, relative to at least one degree of freedom, of the set of booms,
- determining the momentary operating state of the tree-processing device,
- controlling the tree-processing device using first control means,
- controlling the set of booms using second control means.

The invention also relates to a corresponding arrangement and a forestry machine.

When using a tree-processing device to fell a tree, it is often difficult for an operator to see the functions of the harvester head and to time the movements, which the felling of the tree requires, using the set of booms comprising the tree-processing device. Such a situation is repeated, for example, when approaching a tree with a harvester head, when the operator must guide the harvester head to the tree with the aid of the set of booms, at the same time as the harvester head's stripping blades are closed to grip the tree. It is then easy for the operator to move the harvester head at too great a speed with the aid of the set of booms, so that the harvester head will strike the tree at too great a speed, possibly damaging the tree, the harvester head, the set of booms, or all of the aforementioned.

Another example of a problematic situation is the felling sawing of the tree, after which the operator moves the butt of the tree using the harvester head by moving the set of booms in the area in which the tree processing takes place. If in this situation the operator moves the harvester head using the set of booms at the same time as the felling event is taking place, the cutting device, for example, the cutting saw, may be damaged. The problem is thus that, due to poor visibility, the operator can easily damage the forestry machine or the tree trunk being felled, or both of them.

Another related problem is that, in order to avoid damage, the operator can easily wait too long, for example, when felling cutting has ended, even when it would be safe to perform a movement of the booms. Thus time is wasted in unnecessary waiting and the work efficiency diminishes. The same felling-sawing work stages can be repeated 500 - 2000 times during a work shift, so that an additional waiting of, for example, a second in one work stage, can result in a loss of up to several tens of minutes of work time. Unnecessary long waiting to move the set of booms can also lead to a dangerous situation, because the felling of the tree is generally determined by moving the butt of the tree in the opposite direction to the felling direction.

An automated control system for the attitude of a tool suspended at the end of a set of booms is known from publication FI 123932 B. In this control system, the attitude of the tool, for example the attitude of a harvester head when approaching a tree, is also controlled at the same time with the aid of the control commands of the set of booms. A drawback of such a system is that full automation demands extensive sensoring and the forestry machine can be damaged as a result of erroneous measurement by the sensoring.

In addition, the sensoring increases not only the manufacturing costs and price of the machine but also the number of possible failure points in the machine, so that the probability of system disturbances and the need for maintenance increase too.

Publication EP 2939529 A1 discloses a method for controlling a crane of a forest machine, in which method the crane and at least one function other than that for moving the crane are controlled by control functions actuated by controllers in the forest machine. In the method maintaining the control function controlling primarily another function than moving the crane for a time longer than a given threshold time will activate an operation in which the crane head will move from a first location to a second location, or there between, along a predetermined travel path, if the control function has a duration shorter than the time taken by the crane head for moving from the first location to the second location but longer than the threshold time.

The invention is intended to create a simpler method and arrangement than solutions of the prior art for controlling the functions of a set of booms or a tree-processing device suspended from it in connection the felling of a tree. The characteristic features of the method according to the present invention are stated in the accompanying Claim 1 and the characteristic features of the arrangement in Claim 15. Further, the invention is intended to create a simpler forestry machine than solutions of the prior art, by which the felling sawing of a tree can be performed semi-automatically. The characteristic features of this invention are stated in the accompanying Claim 18.

The intention of the method according to the invention can be achieved by means of a method for controlling the functions of a set of booms or a tree-processing device suspended from it in connection with a felling event, in which method the attitude or state of the set of booms is determined and/or estimated relative to at least one degree of freedom, the momentary operating state of the tree-processing device is determined, the tree-processing device is controlled using first control means and the set of booms is controlled using second control means. In the method, one of the set of booms and the tree-processing device is an operating unit and correspondingly the second is a control unit, in which method at least one pre-recorded function, which is bound to a first input created by the operator for the operating unit, is defined in a memory, preferably the memory of the control system of the forestry machine. In connection with the tree-felling event, the pre-recorded function of the operating unit is selected automatically from the memory on the basis of the first input created by the operator, and a second input, which contains a conditional criterion for initiating the selected pre-recorded function of the operating unit, is formed on the basis of the momentarily determined operating state of the control unit. In addition, the selected pre-recorded function of the operating unit is initiated automatically when the criterion of the second input is met, and the selected pre-recorded function of the operating unit initiated by the second input is performed automatically.

By defining the function of the operating unit pre-recorded in the memory, the function in question can be performed automatically, when the operating state of the control unit and the operator permit the performance of the function. Thus the tree-processing device, the set of booms, and the tree are protected by two safety features, i.e. by the automated operation of the operating unit, making it improbable that the operator will break the forestry machine. On the other hand, the forestry machine is protected by the initiation of the function of the operating unit performed by the operator, so that the automated function of the operating unit cannot initiate without supervision by the operator, in case of deviating situations. This permits the forestry machine and system to be implemented in a simpler form, as the method can be implemented without the excessive monitoring and sensoring demanded by full automation.

In this connection, the term operating unit refers to a first part selected from the tree-processing device and the set of booms, which automatically performs a pre-recorded function. The term control unit, for its part, refers to a second part of the tree-processing device and the set of booms, which is not the operating unit, on the basis of the operating state or attitude of which a preselected function can be initiated. The operation of the control unit is preferably manual, whereas the operation of the operating unit is automatic in the case of the pre-recorded function.

In this connection, the definition "in connection with the tree-felling event" refers to the functions of the tree-processing device up to the cutting of the tree into shorter parts, preferably up to the cutting event. In the cutting event, the butt of the tree is separated from the rest of the tree's trunk.

The method is preferably used in connection with forestry machines intended for felling and processing trees. Forestry machines also handle very heavy trees, when the need for automation increases, as the forces acting on the set of booms and the tree-processing device increase and in turn also the risk of damage to the equipment through misuse.

The selected pre-recorded function of the operating unit initiated by the second input is preferably performed automatically relative to at least one degree of freedom of the defined and/or estimated attitude of the operating unit.

The degrees of freedom of the set of booms can be the movement of the set of booms, the direction of movement of the set of booms, the orientation of the set of booms, the reach of the set of booms, the mutual attitudes of booms of the set of booms, the loading of the set of booms, and the distance of the end of the set of booms from the base.

The tree-processing device is preferably a harvester head. In particular, the harvester head has several functions, which for their part can obstruct the operator from seeing what stage the harvester head is currently performing. The semi-automatic operation of the method according to the invention is therefore especially advantageous in connection with harvester heads.

According to one embodiment at least two pre-recorded functions of the operating unit are defined in the memory. The operator can then select the function he wishes already during the operation of the control unit from several pre-recorded functions of the operating unit, if the operating state of the control unit is such that there are alternatives for the next function of the operating unit.

In the method, the pre-recorded function of the operating unit is defined in the memory before felling a tree. The operator can then select a pre-recorded function of the operating unit already before the criterion contained in the second input relating to the operating state of the control unit has been met, so that the pre-recorded function of the operating unit can initiate immediately when the criterion is met. This saves a considerable amount of time during even one work shift.

In the method, a first input is formed preferably on the basis of one or more variables, which variables are: a control signal of the first control means, a control signal of the second control means, a determined property of the tree, the control unit's operating state determined at the moment. Though the determined property of the tree or the control unit's operating state determined at the moment are not events directly caused by the operator, but automatically performed measurements, the formation of the first input from them requires the operator's approval and through that his participation in the operation. For example, the determining of the property of the tree has required the operator to guide the tree-processing device for the processing of the tree, so that the tree's properties can be determined.

In the method according to a first embodiment of the invention, the tree-processing device is used as the control unit and the set of booms as the operating unit. The functions of the tree-processing device often guide the operation of the set of booms temporally and define the correct timing of the movements of the set of booms.

The operating state to be defined of the tree-processing device can be one or more of the following: the movement or attitude of the stripping blades of the tree-processing device, the closing or opening movement or attitude of the feed rollers of the tree-processing device or the rotation of the feed rollers, the level or speed of change of the compressive force of the stripping blades or feed rollers, the attitude of the tree-processing device, the operation, preferably the rotation or operating state of the cutting device of the tree-processing device, the attitude or operating state of the cutting saw, the attitude of the cutting device, preferably the cutting saw of the tree-processing device, the height level of the tree-processing device relative to the base of the set of booms, and the attitude or operating state of the rotation device of the tree-processing device. The initiation of the pre-recorded function of the set of booms can depend on the functions referred to above, on the basis of which the criterion contained in the second input for initiating the operation of the set of booms is either met or not met. In this connection, the term "movement of the stripping blades" can refer to the state of the stripping blades when moving.

The function of the set of booms can be a change in the path of movement of the set of booms and/or a change in the attitude of the set of booms relative to at least one degree of freedom and/or an increase in or removal of the loading of the set of booms relative to at least one degree of freedom or the tensile force caused in the tree by the tree-processing device by loading the other operating device belonging to the set of booms without moving the set of booms or the locking or floating of the other operating devices of the set of booms, i.e. release of the movement of the other operating devices of the set of booms. All of these functions are such that if carelessly performed or carried out at the wrong time by the operator could damage the forestry machine. In addition, the function of the set of booms can be a change in the path of movement by a control signal formed by the operator or a first input formed by the operator.

The criterion contained in the second input is a change in the operating state of the tree-processing device. The term operating state refers either to a function being implemented in the tree-processing device, such as, for example, felling sawing or similar, or a break between functions. For example the termination of felling sawing can be one such change in the operating state, which acts as a criterion for initiating the pre-recorded function of the set of booms. I.e., when felling sawing terminates, the function of the set of booms can be initiated, if the operator has approved this with the aid of the first input.

According to a preferred embodiment, the second input is the rotation of the cutting saw (saw chain) of the tree-processing device, or the attitude of the flange of the cutting saw or its progress relative to the diameter of the butt of the tree being felled, the criterion is the termination of felling sawing and the function of the set of booms is the raising of the set of booms and its folding towards the base of the set of booms. In this connection, the term raising the set of booms preferably refers to the upwards movement of the lifting cylinder of the set of booms, whereas the term folding of the set of booms refers to the movement of the folding cylinder that moves the end of the booms towards the base. In addition, the function of the set of booms can preferably also comprise the lateral movement of the set of booms when the set of booms folds, when the end of the set of booms also moves partly laterally relative to the base of the set of booms.

According to another embodiment, the set of booms is used as the control unit and the tree-processing device as the operating unit.

The function of the tree-processing device can be the movement of the feed rollers performed by the tree-processing device, the first input can be the moving of the set of booms towards the tree parallel to it, and the second input can be a change in the attitude of the feed rollers. In such a case, the automatic control of the tree-processing device according to a pre-recorded function is advantageous.

The cutting device used in the method of the tree-processing device is preferably a chain saw, but it can also be a guillotine cutter, a knife cutter, a circular saw, or some other cutting device suitable for cutting a tree.

In the system according to the invention, a pre-recorded first input is preferably also stored in the memory, using which the operator can interrupt the pre-recorded function of the set of booms in the middle of implementing the function. Thus the operator can at any point whatever interrupt a function implemented by the semi-automation, if something particular happens and the environment and/or the forestry machine is endangered. Thus the risk caused by fully automated functions is avoided, as the operator can initiate and interrupt the operation of the automation.

In an embodiment the pre-recorded functions can be automatic paths of movement/functions of the operating unit, which the operator, according to the prior art, would make manually simultaneously with the operation of the control unit. In the method according to the invention, the paths of movement of the operating unit are not restricted, instead they are automated.

The pre-selected function of the operating unit is preferably performed simultaneously with the function of the control unit performed by the operator. Often the processing and felling of a tree demands the simultaneous use of both the tree-processing device and the set of booms. In the method according to the invention, the function of the operating unit can be performed automatically, so that the operator can concentrate on performing the function of the control unit manually.

The intention of some embodiments of the present disclosure can be achieved using an arrangement for controlling a forestry machine in connection with a tree-felling event, in which the forestry machine includes at least a two-part set of booms, preferably comprising a main boom and a pivoted boom, a tree-processing device for felling trees attached to the set of booms, first operating devices located in the tree-processing device for realizing the functions of the tree-processing device, and second operating devices located in connection with the set of booms for realizing the functions of the set of booms. In addition to this, the forestry machine includes first control means for controlling first operating devices manually and second control means for controlling second operating devices manually for operating the set of booms and the tree-processing device, as well as first determining means for measuring and/or for estimating the operating state of the tree-processing device, arranged to produce a first determination result and second determining means for measuring or determining and/or for estimating the attitude of the set of booms relative to at least one degree of freedom, arranged to produce a second determination result. In addition, the forestry machine includes a control system for using the control signals formed by the first control means and the second control means for controlling the first operating devices and the second operating devices. The arrangement includes a memory connected to the control system and software means arranged with the memory for controlling the first operating devices and the second operating devices at least partly automatically. In the arrangement, one of the set of booms and the tree-processing devices is an operating unit and the other a control unit. The software means are arranged to define in the memory at least one pre-recorded function of the operating unit, which is bound to a first input for the operating unit, and, in connection with the tree-felling event, to select the pre-recorded function of the operating unit automatically from the memory on the basis of a first input created by the operator. In addition, the software means are arranged to form a second input of the basis of the operating state of the control unit at the moment, which includes a conditional criterion for initiating the selected pre-recorded function of the operating unit, to initiate automatically the selected pre-recorded function of the operating unit when the conditional criterion of the second input is met, and to perform the pre-recorded selected function of the operating unit, initiated by the second input, automatically.

In some arrangements of the present disclosure pre-recorded functions of the operating unit can be performed with the aid of the software means, once the operator has selected them with the aid of the first input and the operating state of the operating unit has changed in such a way that it is safe to perform the function of the operating unit. This permits the arrangement to be manufactured in a considerably lighter form than fully automated arrangements, in which significantly extensive sensoring is required in order to detect possible fault states of the sensoring or to make the necessary definitions of attitude or operating state.

The tree-processing device is preferably a harvester head, which includes an inertia-measuring unit for determining the state of movement of the harvester head and indirectly also of the tree being felled. With the aid of the inertia-measuring unit the state of movement of the harvester head and indirectly also of the tree being felled can be determined precisely and the movements of the set of booms can be automated on its basis to optimize the end result.

The software means are preferably arranged to perform the selected pre-recorded function initiated by the second input automatically on the basis of the degree of freedom defined and/or estimated by the operating unit.

The intention of the forestry machine according to the invention can be achieved by means of a forestry machine, which includes an arrangement according to the aforesaid embodiment.

By means of the method, arrangement, and forestry machine according to the invention, the advantage is achieved that it is possible to facilitate the control of the manual movements of demanding work stages, as the software means time the movements of the operating unit automatically according to the (completing) of the work stages of the control unit and prevent damaging functions before the completion of the previous work stage. Using the invention also prevents the breaking of the forestry machine, as functions are prevented that could damage the forestry machine in the wrong work stage or operating state. As an additional advantage, the invention permits efficient working in poor visibility, when the feeling event cannot be seen by the operator due to, for example, night, snow, distance, or the operator's vision. As another additional advantage the invention permits working without worries at greater distances, when the efficiency of working improves, as the need to move the forestry machine is reduced and the working speed increases. The safety of the felling event and the precision of the felling direction also improve, because the movement of the tree butt is commenced as far as possible at the right time.

In the following, the invention is described in detail with reference to the accompanying drawings showing some embodiments of the invention, in which
- Figure 1: shows the forestry machine according to the invention and the arrangement in it as an axonometric schematic diagram,
- Figure 2: shows the stages of the method according to the invention as block diagrams,
- Figure 3: shows a side view of one harvester head when it is the tree-processing device of the forestry machine,
- Figure 4a: shows the tree-felling event axonometrically, when the harvester head has gripped the tree,
- Figure 4b: shows the tree-felling event axonometrically, when the has been felled and turned to the stripping attitude with the aid of the set of booms and the harvester head,
- Figure 5: shows the stages of a second embodiment of the method according to the invention as block diagrams.

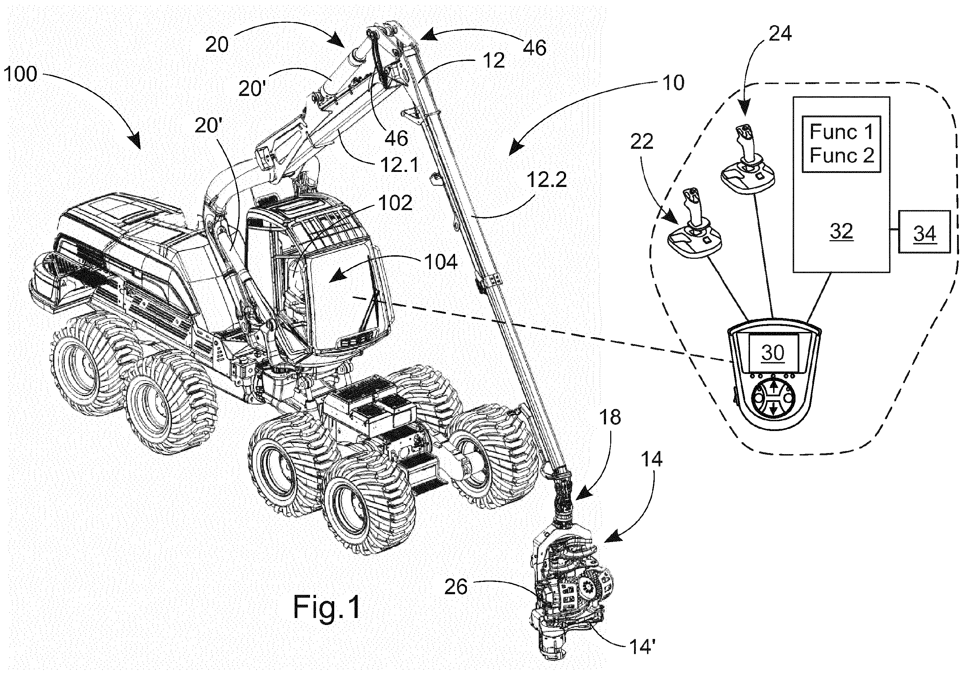

Figure 1 shows the arrangement 10 and forestry machine 100 according to the invention. The arrangement 10 according to the invention is preferably part of a forestry machine 100, i.e. the forestry machine 100 is equipped with the arrangement 10 according to the invention already during manufacture. Alternatively, the arrangement 10 can be arranged in already existing forestry machines, in which there are the other components required by the arrangement.

In the main embodiment of the invention shown in Figures 1 - 4b, the set of booms acts as the operating unit and the tree-processing device as the control unit and the operation and characteristics of the invention are described in relation to this embodiment. In this connection, the term main embodiment refers to the choice of the set of booms and tree-processing device as the operating unit and control unit.

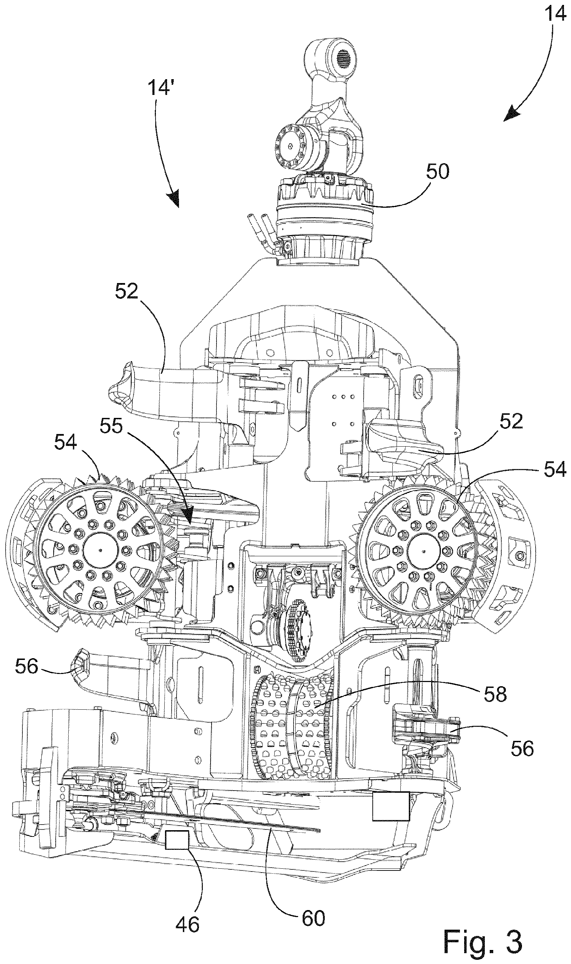

The arrangement 10 can be applied to a forestry machine 100, such as, for example, a forestry machine equipped with wheels or a crawler chassis, which includes at least a set of booms 12 and a tree-processing device 14 together with operating devices 18 and 20, control means 22 and 24, and determining means 26 and 28. Preferably, the set of booms is a structure consisting of at least two booms pivoted to each other, i.e. a main boom 12.1 and a pivot boom 12.2, pivoted to the frame of the forestry machine 100, to which is attached a tree-processing device 14 for felling trees 16. The pivot booms of the set of booms preferably comprises an extendable extension, a so-called telescopic extension, to increase the reach of the set of booms. The tree-processing device 14 is preferably the harvester head 14' shown in Figures 1 and 3, which is either suspended from or otherwise attached to the set of booms 12. Hereinafter, when describing the embodiments, a harvester head will be used as an example of the tree-processing device, but it should be understood that, instead of a harvester head, the tree-processing device can also be an energy grab or other tool used in the felling event.

To perform the functions of the harvester head 14', the forestry machine 100 includes the first operating device 18 of the harvester head 14', which can be, for example, hydraulic cylinders or motors, which drive, for example, the rotation device 50 of the harvester head 14' of Figure 3, the cutting saw 60, the stripping blades 52 and 56, the feed rollers 54 and 58, and the opening and closing mechanism 55 of the feed rollers 54 and 58. Correspondingly, to perform the functions of the set of booms 12, in connection with the set of booms 12 there are second operating devices 20, which are, for example, hydraulic cylinders 20' pivoted between the various parts of the set of booms 12.

The first control means 22 control the first operating devices 18 and through them the operation of the harvester head 14' manually at least when the operator himself is controlling the harvester head 14'. The second control means 24 in turn control the operation of the second operating devices 20 for operating the set of booms manually at least when the operator himself is controlling the set of booms. The first control means and the second control means can also be fitted to a single controller, which can be located in the forestry machine or in a remote-control point of the forestry machine with the aid of telecommunications links. More generally, the first control means and the second control means are joysticks, used by the operator, in the cab of the forestry machine.

Because in the arrangement 10 and forestry machine 100 according to the invention it is sought to achieve semi-automation of the movements of the set of booms 12, it must be possible to monitor the functions of both the harvester head 14' and the set of booms 12 automatically. The first determining means 26 perform the measurement and/or estimation of the operating state of the harvester head 14', thus producing a first determination result. The determining means are preferably sensors, which measure the various functions of the harvester head 14', such as the rotation speed or attitude of the saw chain of the cutting saw, the attitude of the stripping blades, the attitude of the harvester head, and similar. An inertia-measuring unit (IMU) can also be used as a kind of sensor, on the basis of which the attitude and state of movement of the harvester head can be known precisely, but the attitude and state of movement of the tree can be known indirectly. Thus when the tree is sufficiently firmly in the grip of the harvester head (against the bottom and with a suitable support force of the cutting blade and feed rollers) length measurement of the tree will operate reliably. In addition to or in place of direct measurement, the operating states of the harvester head can also be guessed, i.e. estimated on the basis of previous determination results determined from the harvester head. This can mean, for example, that, on the basis of a change in the rotation speed of the cutting saw or a change in the speed of movement of the cutting flange or a change in the flow or pressure of the pressure medium, the time of the termination of the felling sawing can be estimated.

In connection with the set of booms 12, the attitude or state of the set of booms 12 can be measured and/or estimated with the aid of the second determining means 28 relative to at least one degree of freedom, in order to produce a second determination result. Preferably, the second determining means too are sensors 46, with the aid of which, for example, the momentary location or attitude of the set of booms is determined. In addition to or in place of this, the location, path of movement, or internal stresses in the set of booms, which can be created with the aid of the operating devices, can also be estimated. In addition, it should be noted that the forces acting on the tree being felled by the harvester head can also be determined.

In the forestry machine, the control signals formed by the first control means 22 and the second control means 24 are converted with the aid of the control system 30 into commands to the valves regulating the movements of the operating devices 18 and 20. The control system 30 can be, for example, the central computer of the forestry machine 100, which by using a CAN bus or similar data-transfer bus transfers the control commands between the valves controlling the control means, determining means, and operating devices.

In the arrangement 10 according to the invention, the arrangement 10 itself includes a memory 32 connected to the control system 30 and software means 34 arranged in the memory 32. The software means preferably act between the control system, the control means, the determining means, and the operating devices, thus permitting the operator to perform semi-automation in addition to manual commands. The software means are preferably some software or computer program or computer-program product, which operates on top of the control system. According to one embodiment, the software means can also be located at the end of a remote connection, so that data of the control system of the forestry machine are sent to the software means at another location using the remote connection. In the arrangement 10, at least one pre-recorded function of the set of booms 12, which is bound to a first input 36 for the set of booms, is defined in the memory 32 with the aid of the software means 34. This means that, for example, the operator can, through the graphical user interface of the control system 30 pre-define in the memory 32 a path of movement of the set of booms, which he wishes to realize during, after, or before some function of the harvester head. Alternatively, this pre-recorded function of the set of booms can be recorded in the memory 32 already at the factory. A situation can be used as an example in which, after felling sawing of the harvester head a lift and a move of the tree to the processing location is made by the set of booms.

In this connection, the term pre-recording means that one or more control signals to the valves controlling the second operating devices of the set of booms are recorded in the memory. Preferably a series of several control signals relates to one pre-recorded function. In addition to the control signals, a second input and a conditional criterion it contains, by which the control signals can be implemented, are also defined to be monitored in the case of each pre-recorded function of the set of booms. For example, if the pre-recorded function of the set of booms is the path of movement of the set of booms, the second input can be, for example, a change in the rotation speed of the saw chain of the cutting saw, when the conditional criterion for initiating the path of movement of the set of booms can be a sudden rise in the rotation speed of the saw chain, which indicates that sawing through has taken place. In addition, the second input for initiating the path of movement of the set of booms can be, for example, a drop in the rotation speed of the cutting saw below a limit value, or a change in the rotation speed by a limit value. Other alternatives can be the attitude, speed of movement, speed of movement relative to the rotation speed of the saw chain, and/or the pressure force or the speed of change in these of the saw flange.

In this case, the first input 36 for the set of booms is preferably, for example, a command of some second control means, to which the pre-recorded function of the set of booms is linked. I.e. the operator can, for example, by rotating the control means, such as, a joystick, select a pre-recorded function, if he decides not to perform the function in question manually. In other words, when the operator performs some command of the control means, the software means detect the command as being the same as the command for selection of the pre-recorded function of the set of booms.

When the first input 36 comes from the operator to the software means 34, the software means 34 are arranged to automatically select the pre-recorded function of the set of booms 12 from the memory 32 on the basis of the first input 36 created by the operator and to form a second input 38 on the basis of the operating state of the harvester head 14' at that moment, which contains a criterion, preferably conditional, for initiating a pre-recorded function of the set of booms 12. In other words, the software means 34 collect the determination results formed by the first determining means and, on their basis, form a second input 38, i.e. an initiation command to perform the pre-recorded function of the set of booms, when some criterion, such as, for example, the termination of the felling sawing, is met. Thus the pre-recorded function of the set of booms is not initiated before the criterion is met and it is safe to begin to perform functions of the set of booms without breaking the harvester head or damaging the environment. As a practical example, the sensor monitoring the position of the cutting saw of the harvester head notifies the control system of the position of the cutting saw. When the diameter of the tree is known on the basis of the data determined from the stripping blades and/or the feed rollers and at the same time the angle of rotation is monitored from the saw case of the saw flange of the cutting saw, it can be decided when the tree has been sawn through. The condition of the criterion is that the tree is sawn through and when it is met, the preselected function of the set of booms can be initiated.

Alternative criteria can be a change in the speed of rotation of the cutting saw, when the sawing through of the tree can be detected from the acceleration in the rotation speed of the saw. A second alternative criterion can be a change in the speed of rotation of the saw flange of the cutting saw, when cutting through can be detected from the acceleration in the speed of rotation of the saws flange. A third alternative is to monitor the pressure acting over the motor of the cutting saw, when a reduction in pressure tells of sawing through. A fourth alternative is to monitor the change in current, if the cutting-saw motor is electric. A fifth alternative is to monitor the acceleration of the harvester head with the aid of an inertia-measuring unit, when a change in it can be interpreted as sawing through happening. In addition to this, the criterion can also be some other data obtained through the determining means.

Finally, the software means are arranged to perform the pre-recorded function of the set of booms 12 initiated by the second input 38 automatically on the basis of the attitude of the set of booms 12 determined and/or estimated relative to at least one degree of freedom. In other words, the said software means 34 forward to the memory 32 the control signal or signals relating to the pre-recorded function of the set of booms from the control system 30 to the valves controlling the operating devices of the set of booms, in order to operate the second operating devices.

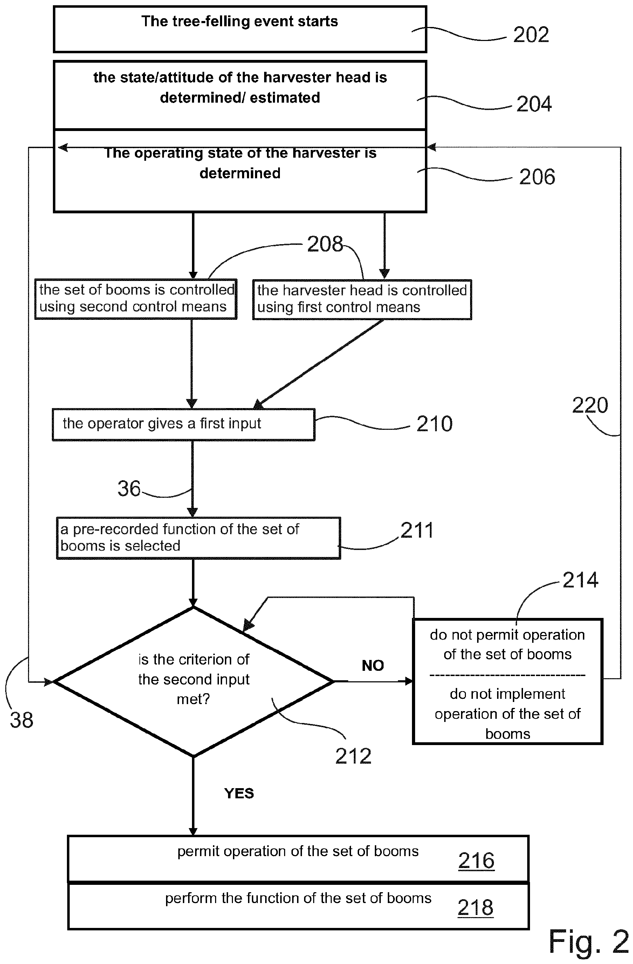

The following describes the stages of the method according to the invention as stages 202 - 220 according to Figure 2. The method according to the invention relates to the control of the set of booms in connection with a tree-felling event, i.e. to events preceding the cutting sawing of the felled tree. It should be understood, that, though the stages 202 - 220 are shown as being consecutive in Figure 2, the stages 204 - 208 take place in practice simultaneously. According to stage 204, the operating state of the harvester head is determined and/or estimated continuously with the aid of first determining means, so that the control system and the operator have information on the state of the harvester head at the moment. The operating state of the harvester head can be an active state, in which the first operating devices perform a specific function in the harvester head, or a passive state, in which the harvester head awaits the operation of the set of booms. According to stage 206, at the same time the operating state of the set of booms is determined and/or estimated continuously with the aid of second determining means, so that the control system and the operator have information on the momentary operating state of the set of booms. The operating state of the set of booms can be an active state, in which the second operating devices perform a specific function of the set of booms, i.e. the path of movement or the tension in the set of booms, or a passive state, in which the set of booms awaits the operation of the harvester head or is locked. Stages 204 and 206 take place continuously during all the method stages.

According to stage 208, in connection with the felling event the harvester head is controlled with the aid of first control means to perform the tree-felling event and to support the feed tree when moving the tree. Correspondingly, the operations of the set of booms are controlled with the aid of second control means to bring the harvester head to the tree and for the harvester head to support the tree to move it to the desired location for further processing. In addition to this, the set of booms can be used to stress the tree with the aid of the harvester head by pushing, pulling, and/or lifting the tree or removing the tension from the tree, if the harvester head is moved with the aid of the feed rollers along the trunk of the still unfelled tree. The control operations of stage 208 preferably take place manually by the action of the operator, i.e. the operator controls the operation with the aid of the first control means and the second control means.

The operator can, before the tree-felling event, during the tree-felling event, or after the tree-felling event, select some pre-recorded function of the set of booms according to phase 210, which he wishes to be performed automatically. The selection can take place, for example, using the second control means. The control signal of the second control means then acts as the first input 36 for the software means, when selected the pre-recorded function of the set of booms from the memory according to stage 211.

For the pre-recorded function of the set of booms to be able to be performed, a second input 38 is required in addition from the first determining means of the harvester head, which determine the operating state of the harvester head at the moment. This determining takes place continuously, as previously stated, when, in addition to the operating state a conditional criterion contained in the second input is required, which defines the permitted operating states of the harvester head or their sub-areas. The meeting of the criterion is monitored continuously when the first input reaches the software means according to stage 212. If the criterion is not met according to stage 214, the pre-recorded function of the set of booms cannot be initiated, but instead the software means continue the program cycle 220 of the examination of the criterion, which repeats stages 206, 212 and 214, until the criterion is met. In other words, the determination result of the said first determining means is compared with the limit value or values of the criterion continuously and when the determination result is in the area permitted, i.e. in the area meeting the criterion the pre-recorded function of the set of booms can be permitted, i.e. the control signals can be forwarded according to stage 216. The pre-recorded function of the set of booms can then be performed according to stage 218.

The following is a description of the use of various embodiments of the disclosed method, with the aid of Figures 3 - 4b. According to the first embodiment, the method can be used in a stage of the felling of a tree before the tree is felled, or when approaching the tree and when gripping the tree. The pre-recorded function of the set of booms is then the path of movement towards the tree of the set of booms taking place at a restricted speed as the stripping blades close around the tree. In this way the harvester head is prevented from being driven too fast onto the tree and the risk of breaking the stripping blades is reduced.

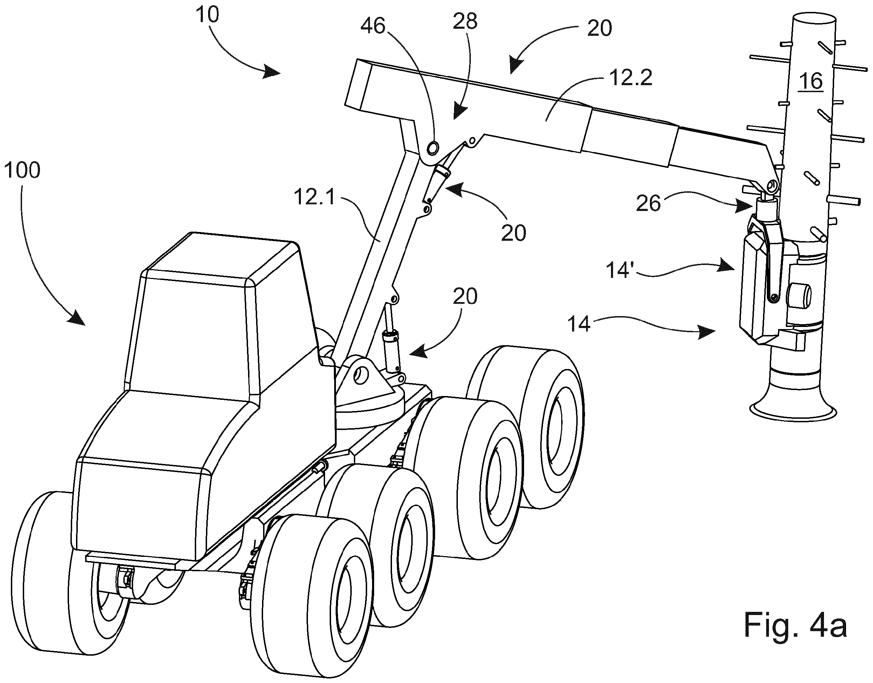

The second embodiment takes place before the felling event of the tree 16, when the tree 16 has been gripped by the harvester head 14', the stripping blades of the harvester head 14' are closed, and also the feed rollers are closed on the tree according to Figure 4a. Then when running the harvester head to the butt of the tree or running the harvester head using the feed rollers upwards on the tree trunk, as the pre-recorded function of the set of booms the set of booms is controlled or the set of booms is used to monitor the movement of the harvester head to reduce the stresses in the set of booms. In this way the stress in the set of booms is reduced, which arises when the harvester head is run onto the tree using the feed rollers and the position of the end of the set of booms changes while the pivots of the set of booms remain stationary.

According to the third embodiment, when the harvester head is gripping the tree, the harvester head is pushed in some direction by moving the set of booms in order to create the desired stress and preferably also the direction. The prestressing can be in three directions up, forward, of the side, or a combination of these. The pre-recorded function of the set of booms is then the movement of the set of booms in the desired direction in order to stress the tree trunk and/or the set of booms.

According to the fourth embodiment, the pushing of a large tree is permitted before felling, so that the tree is assisted to fall in the right direction and the risk is reduced of the tree falling in the wrong direction or in the direction of the forestry machine.

According to the fifth and particularly preferred embodiment, the pre-recorded function of the set of booms in connection with the felling event is the locking of the second operating devices. The second input is then the rotation speed of the cutting saw, which when it is greater than 0, the second operating devices of the set of booms are locked and the movement of the set of booms is prevented.

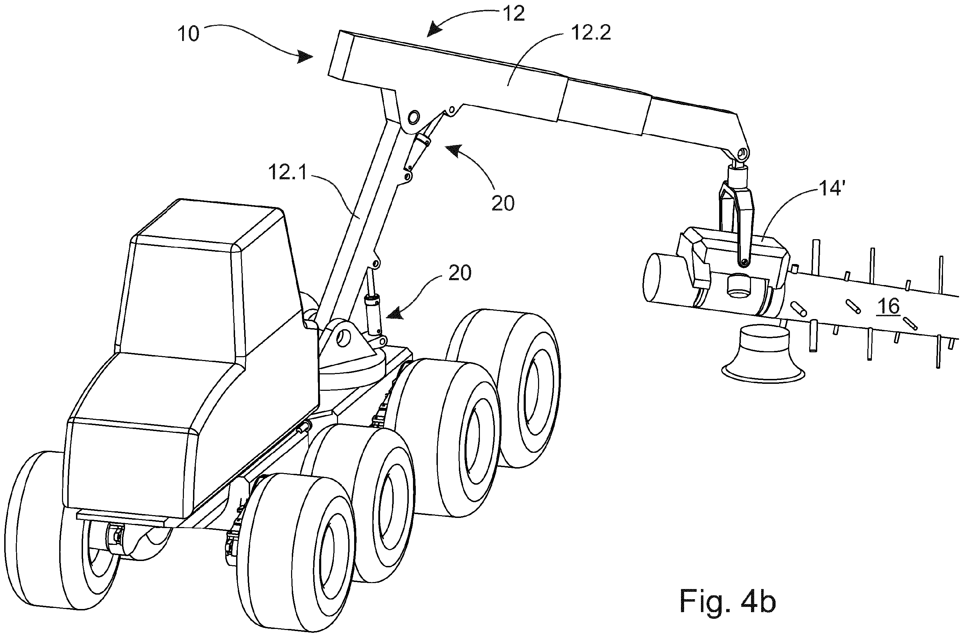

The pre-recorded function of the set of booms of the sixth embodiment is the path of movement of the set of booms, which can be implemented when the criterion of the second input is met. Here the criterion is the rotation speed of the cutting saw, which when it is zero the pre-recorded path of movement can be implemented. In other words, the movement of the set of booms is prevented when the cutting saw is cutting the tree. The said path of movement of the set of booms can be partly lifting (initially) and partly pulling towards the machine or processing location or cutting-sawing location. The term cutting-sawing location refers to the place where the felled tree can be stripped and cut according to the cut-to-length logging method (CTL) . In Figure 4b, the set of booms 12 and the harvester head 14' have been run to the felling event, i.e. to the felling-event location. More precisely, the pre-recorded function of the set of booms, i.e. the path of movement of the set of booms in the direction of the forestry machine can be formed in in such a way that the desired shape of the path of movement is defined, i.e. rising rapidly and thereafter linear. The zero point of the path of movement can be bound to the felling location, when the path of movement between the zero point and the forestry machine or processing location can be defined to have the selected shape, it being particularly initially rising towards the transfer location, after which there is linear movement horizontally, or rising or falling at the selected angle. The profile of the path of movement can be determined by the operator, such as, for example, rising over a distance of 1 metre and otherwise at the same height.

The seventh embodiment is otherwise the same as the sixth, but when working on a slope attention is also paid to the height location of the forestry machine relative to the zero point. The first and second determining means should then determine the locations and the height differences of the locations of the harvester head and forestry machine.

According to the eighth embodiment, the method can be used to implement feed of the tree during felling. This means that when the tree has been sawn through and falls, the tree trunk in the harvester head is fed towards the cutting point, when the potential energy of the tree can be exploited and time saved. As the tree moves downward, it saves energy and fuel, as in the horizontal position (normal state) the feeding of the tree using the feed rollers consumes more energy. More specifically, the pre-recorded function of the set of booms is the path of movement, which is realized when the inertia-measuring unit of the harvester head or the second determining means of the boom tell that the tree has started to fall.

According to the second main embodiment, the tree-processing device acts as the operating unit and the set of booms as the control unit. When in the first main embodiment of the invention described in connection with Figures 1 - 4b the operation of the set of booms is controlled semi-automatically on the basis of the operating state of the tree-processing device, in the second main embodiment it is possible to correspondingly control the operation of the tree-processing device semi-automatically on the basis of the operating state of the set of booms. The following describes examples of the second main embodiment of the present disclosure, in which the tree-processing device acts as the operating unit and the set of booms as the control unit. An example of such a situation is when the harvester head acting as the tree-processing device is used to grip the tree at a height of about 2 metres in a situation in which it is intended and necessary to run the harvester head at the butt (roots) of the tree in the trunk of the tree. This running needs the movement of the set of booms to follow the changing attachment point and the rotation (i.e. feed) of the feed rollers of the harvester head to run the harvester head to the butt of the tree.

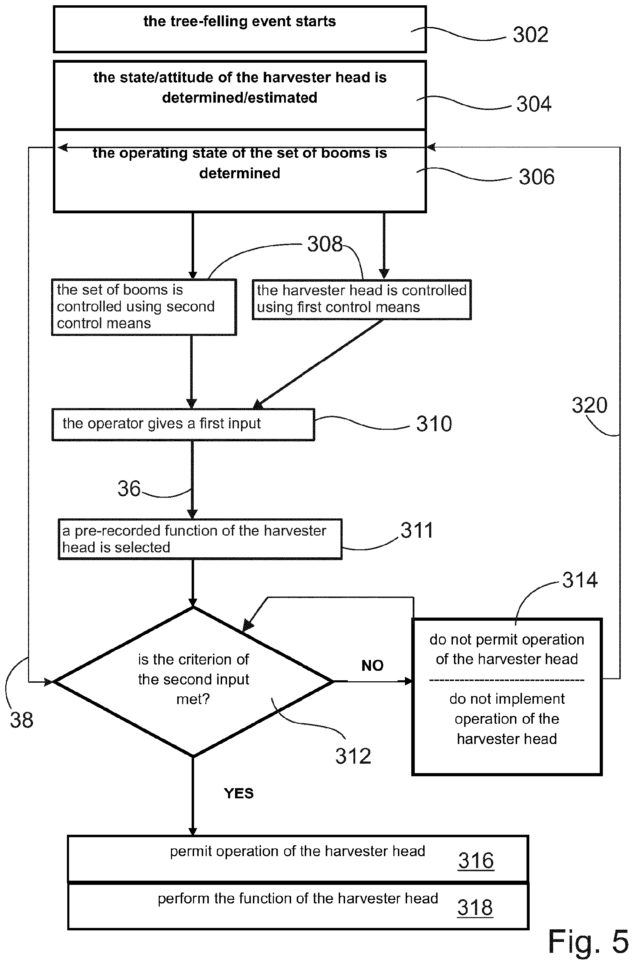

Figure 5 shows a simple block diagram of the implementation of the second main embodiment.

Generally in the method the tree-felling event begins according to stage 302 and initially the state or attitude of the harvester head is determined or estimated according to stage 304. This can mean, for example, determining the attitude of the striping grabs, on the basis of which contact with the tree is decided. At the same time, the function of the set of booms is also determined according to stage 306, which can be, for example, simply is the set of booms moving on not. The operator controls the harvester head using the first control means and the set of booms using the second control means according to stage 308, for example, to bring the harvester head into contact with the tree to be felled by moving the set of booms towards the tree. Once the operator has guided the harvester head into contact with the tree and the harvester head detects contact with the tree, the operator gives the first input, i.e. begins to move the set of booms according to stage 310. On the basis of a previously defined state or attitude of the harvester head, such as, for example, that the stripping grabs are closed, the operator can then select the pre-recorded function of the harvester head from the memory according to stage 311. In this case, the function can be, for example, running the feed rollers automatically to follow the set of booms. Before initiating the preselected function, the automation checks the meeting of the second input according to state 312. The criterion of the second input can be, for example, the direction of movement of the set of booms parallel to the tree or the attitude of the stripping blades, from which the diameter of the tree is determined. Trees with a sufficiently large diameter are so large that the feed devices of the harvester head may not necessarily be able to move the tree, instead the transfer must be performed with the aid of the set of booms. When the second criterion is met the control system permits the pre-recorded function to be performed according to stage 316 and then performs the rotation of the feed rollers and runs the feed rollers along the tree trunk automatically monitoring the movement of the set of booms according to stage 318. Preferably the control system matches the speed of the feed with the speed of movement of the end of the set of booms downwards, when it can minimize or prevent stress from arising in the set of booms and the harvester head. The control system is preferably able to run the set of booms to arrange its attitude in such a way that the end of the set of booms follows the direction of the tree trunk, as the end of the set of booms is directed essentially downwards in the case of only one part of the set of booms (i.e. the driver uses only one controller).

A second example of the implementation of a second main embodiment is a situation, in which the tree has been felled and is horizontal. It is particularly advantageous to use the invention in a situation in which the tree is especially large and the power of the set of booms, the forestry machine, or the harvester head is insufficient to process the tree in a normal manner. If it is desired to follow the tree using a crane, the movement of the set of booms and the feed of the harvester head must be synchronized and parallel to the tree trunk. The operator then guides the set of booms, so that the feed of the harvester head runs automatically along the tree trunk following the movement of the set of booms. In this way, the feed and functions of the harvester head are made to react (for example, to stop) more quickly than the movement of the set of booms. If the movement of the set of booms stops suddenly, the harvester head feed also stops rapidly.

What is advantageous in connecting the functions of the set of booms and the harvester head together is that the movement is synchronized according to the slower part. I.e., because the set of booms often moves more slowly that the harvester head feed, it is then preferable to make the harvester head follow the functions of the boom. The harvester head is then the operating unit and the set of booms the control unit.

The embodiments of the present disclosure do not depend on the presence of the operator. In other words they can operate in a fully autonomic, automatic, or remotely controlled machine.

Their implementation requires knowledge of the attitude and state of movement of the set of booms, i.e. sensoring relative to the attitude and state of movement (acceleration), and of the operating state of the harvester head.

## Claims

1. Method for controlling the functions of set of booms or of a tree-processing device attached to it, in which method
- determining and/or estimating the attitude or state, relative to at least one degree of freedom of the set of booms (12),
- determining a momentary operating state of the tree-processing device (14),
- controlling the tree-processing device (14) using first control means,
- controlling the set of booms (12) using second control means (24),
in which method either the set of booms (12) or the tree-processing device (14) is an operating unit and the other is correspondingly a control unit, in which method at least one pre-recorded function of the operating unit is defined in a memory (32) and is bound to a first input (36) created by an operator for the operating unit, and:
- selecting the pre-recorded function of the operating unit automatically from the memory (32) on the basis of the first input (36) created by the operator,
- forming a second input (38) on basis of the determined momentary operating state of the control unit, which contains a conditional criterion for initiating selected pre-recorded function of the operating unit,
- initiating the selected pre-recorded function of the operating unit automatically when the conditional criterion of the second input (38) is met,
- performing the selected pre-recorded function of the operating unit initiated by the second input (38),
wherein the method takes place in connection with the event of felling a tree and said selected pre-recorded function of the operating unit is performed automatically, **characterized in that** the criterion is a change in the operating state of the tree-processing device (14).

2. Method according to Claim 1, **characterized in that** the said first input (36) is formed on the basis of one or more variables, which variables are: a control signal of the first control means (22), a control signal of the second control means (24), a defined property of the tree (16), the operating state of the control unit determined at the moment.

3. Method according to Claims 1 or 2, **characterized in that** the tree-processing device (14) is used as the control unit and the set of booms (12) as the operating unit.

4. Method according to Claim 3, **characterized in that** the tree-processing device (14) is a harvester head (14') having stripping blades (52, 56), feed rollers (54, 58), a cutting device, preferably a cutting saw (60) and a rotator (50), the operating state to be determined on the harvester head (14') is one or more of the following: movement or attitude of the stripping blades (52, 56), movement or attitude of the feed rollers (54, 58), attitude of the harvester head (14'), rotation or operating state of the cutting device, attitude of the cutting device (60), height location of the tree-processing device (14) relative to a base of the set of booms, attitude or operating state of the rotator (50).

5. Method according to Claim 3 or 4, **characterized in that** the said function of the set of booms (12) is a path of movement performed by the set of booms (12) and/or a change in the attitude of the set of booms (12) relative to at least one degree of freedom and/or an increase in or removal of the stress of the set of booms (12) relative to at least one degree of freedom by loading the second operating device (20) belonging to the set of booms (12) without moving the set of booms (12) or locking the second operating devices (20) of the set of booms (12).

6. Method according to any of Claims 3 - 5, **characterized in that** the tree processing device (14) is a harvester head (14') having a cutting saw (60) and the second input (38) is the rotation of the cutting saw (60) of the harvester head (14'), the criterion is termination of felling sawing and the said function of the set of booms (12) is raising of the set of booms (12) and hooking towards the base of the set of booms (12) .

7. Method according to Claim 1, **characterized in that** the set of booms (12) is used as the control unit and the tree-processing device (14) as the operating unit and the tree-processing device (14) is a harvester head (14') having feed rollers (54, 58) and the function of the harvester head (14') is the movement of the feed rollers (54, 58) performed by the tree-processing device (14), the first input (36) is movement of the set of booms (12) parallel to the tree and the second input (38) is a change in attitude of the feed rollers (54, 58) .

8. Method according to any of Claims 1 - 7, **characterized in that** a pre-recorded first input is defined in the memory (32) for interrupting the selected pre-recorded function of the operating unit in the middle of implementing the function.

9. Method according to any of Claims 1 - 8, **characterized in that** the selected pre-recorded function of the operating unit is performed simultaneously with the function of the control unit performed by the operator.

10. Method according to any of Claims 1 - 9, **characterized in that** the selected pre-recorded function of the operating unit initiated by the second input (38) is performed automatically relative to at least one degree of freedom of the attitude determined and/or estimated by the operating unit.

11. Arrangement for controlling a forestry machine, in which the forestry machine (100) includes at least
- an at least two-part set of booms (12), preferably comprising a main boom (12.1) and a pivot boom (12.2),
- a tree-processing device (14) attached to the set of booms (12) for felling trees (16),
- first operating devices (18) located in the tree-processing device (14) for implementing the functions of the tree-processing device (14),
- second operating devices (20) located in connection with the set of booms (12) for implementing the functions of the set of booms (12),
- first control means (22) for controlling the first operating devices (18) and second control means (24) for controlling the second operating devices (20) in order to operate the tree-processing device (14) and the set of booms (12),
- first determining means (26) for measuring and/or estimating the operating state of the tree-processing device (14), arranged to produce a first determining result,
- second determining means (28) for determining and/or estimating the attitude of the set of booms (12) relative to at least one degree of freedom, arranged to produce a second determining result,
- a control system (30) for using the control signals formed by the first control means (22) and the second control means (24) to control the first operating device (18) and the second operating devices (20),
in which the arrangement includes a memory (32) connected to the control system (30) and software means (34) arranged in the memory (32) for controlling the first operating devices (18) and second operating devices (20), in which arrangement either one of the set of booms (12) and the tree-processing device (14) is the operating unit and correspondingly the other is the control unit and the software means (34) are arranged:
- to define in the memory (32) at least one pre-recorded function of the operating unit, which is bound to a first input (36) for the operating unit and to perform the following functions a - d:
a) to select the pre-recorded function of the operating unit automatically from the memory (32) on the basis of the first input created by the operator and
b) to form on the basis of the momentary operating state of the control unit a second input (38), which contains a conditional criterion for initiating the selected pre-recorded function of the operating unit,
c) to initiate the selected pre-recorded function of the operating unit automatically when the criterion of the second input (38) is met, and
d) to perform the selected pre-recorded function
of the operating unit initiated by the second input (38), wherein said software means (34) are arranged to perform said functions a) - d) in connection with the tree felling event and to perform automatically the selected pre-recorded function of the operating unit, **characterized in that** the criterion is a change in the operating state of the tree-processing device (14) .

12. Arrangement according to Claim 11, **characterized in that** the tree-processing device (14) is a harvester head (14'), which includes an inertia-measuring unit for determining the state of movement of the tree (16) being felled.

13. Arrangement according to Claim 11 or 12 **characterized in that** the software means (34) are arranged to perform automatically the selected pre-recorded function of the operating unit initiated by the second input (38) on the basis of the determined and/or estimated degree of freedom of the operating unit.

14. Forestry machine, **characterized in that** the forestry machine (100) includes an arrangement (10) according to any of Claims 11 - 13.

## Patentansprüche

1. Verfahren zur Steuerung der Funktionen eines Kranauslegers oder eines daran befestigten Harvesteraggregats, bei dem das Verfahren
- die Bestimmung und/oder Einschätzung der Lage oder des Zustands, bezogen auf mindestens einen Freiheitsgrad des Kranauslegers (12),
- die Bestimmung eines momentanen Betriebszustands des Harvesteraggregats (14),
- die Steuerung des Harvesteraggregats (14) unter Verwendung erster Steuermittel,
- die Steuerung des Kranauslegers (12) unter Verwendung zweiter Steuermittel (24) ermöglicht,
bei dem das Verfahren entweder der Kranausleger (12) oder das Harvesteraggregat (14) eine Arbeitseinheit ist und der oder das andere entsprechend eine Steuereinheit ist, bei dem das Verfahren mindestens eine vorgespeicherte Funktion der Arbeitseinheit in einem Speicher (32) definiert hat und an eine von einem Bediener für die Arbeitseinheit erzeugte erste Eingabe (36) gebunden ist, und:
- automatisches Auswählen der vorgespeicherten Funktion der Arbeitseinheit aus dem Speicher (32) auf Grundlage der vom Bediener erzeugten ersten Eingabe (36) erfolgt,
- Bilden einer zweiten Eingabe (38) auf Grundlage des ermittelten momentanen Betriebszustands der Steuereinheit, die ein bedingtes Kriterium zum Einleiten einer ausgewählten voraufgezeichneten Funktion der Arbeitseinheit enthält,
- automatisches Einleiten der ausgewählten voraufgezeichneten Funktion der Arbeitseinheit, wenn das Bedingungskriterium der zweiten Eingabe (38) erfüllt ist,
- Ausführen der ausgewählten voraufgezeichneten Funktion der Arbeitseinheit, die durch die zweite Eingabe (38) initiiert wurde,
wobei das Verfahren in Verbindung mit dem Ereignis des Fällens eines Baumes stattfindet und die ausgewählte voraufgezeichnete Funktion der Arbeitseinheit automatisch ausgeführt wird, **dadurch gekennzeichnet, dass** das Kriterium eine Änderung des Betriebszustandes des Harvesteraggregats (14) ist.

2. Verfahren gemäß dem Patentanspruch 1, **dadurch gekennzeichnet, dass** die besagte erste Eingabe (36) auf der Grundlage einer oder mehrerer Variablen gebildet wird, wobei die Variablen sind: ein Steuersignal des ersten Steuermittels (22), ein Steuersignal des zweiten Steuermittels (24), eine definierte Eigenschaft des Baumes (16), der aktuell ermittelte Betriebszustand der Steuereinheit.

3. Verfahren gemäß dem Patentanspruch 1 oder 2, **dadurch gekennzeichnet, dass** das Harvesteraggregat (14) als Steuereinheit und der Kranausleger (12) als Arbeitseinheit verwendet werden.

4. Verfahren gemäß dem Patentanspruch 3, **dadurch gekennzeichnet, dass** das Harvesteraggregat (14) ein Harvesterkopf (14') mit Entastungsmessern (52, 56), Vorschubwalzen (54, 58), eine Sägeeinheit, vorzugsweise eine Schneidsäge (60) und ein Rotator (50) ist, wobei der am Harvesterkopf (14') zu bestimmende Betriebszustand einer oder mehrerer der folgenden ist:
Bewegung oder Stellung der Entastungsmesser (52, 56), Bewegung oder Stellung der Vorschubwalzen (54, 58), Stellung des Harvesterkopfes (14'), Drehung oder Betriebszustand der Sägeeinheit, Stellung der Sägeeinheit (60), Höhenlage des Harvesteraggregats (14) relativ zum Unterbau des Kranauslegers, Stellung oder Betriebszustand des Rotators (50).

5. Verfahren gemäß dem Patentanspruch 3 oder 4, **dadurch gekennzeichnet, dass** die besagte Funktion des Kranauslegers (12) ein Bewegungspfad des Kranauslegers (12) und/oder eine Änderung der Lage des Kranauslegers (12) relativ zu mindestens einem Freiheitsgrad und/oder eine Erhöhung oder Aufhebung der Spannung des Kranauslegers (12) relativ zu mindestens einem Freiheitsgrad durch Belastung der zum Kranausleger (12) gehörenden zweiten Arbeitsvorrichtung (20) ist, ohne den Kranausleger (12) zu bewegen oder die zweiten Arbeitsvorrichtungen (20) des Kranauslegers (12) zu blockieren.

6. Verfahren gemäß einem der Patentansprüche 3 - 5, **dadurch gekennzeichnet, dass** das Harvesteraggregat (14) ein Harvesterkopf (14') mit einer Schneidsäge (60) ist und der zweite Eingang (38) die Drehung der Schneidsäge (60) des Harvesterkopfes (14') ist, das Kriterium die Beendigung des Fällsägens ist und die besagte Funktion des Kranauslegers (12) ein Anheben des Kranauslegers (12) und ein Einhaken in Richtung des Unterbaus des Kranauslegers (12) ist.

7. Verfahren gemäß dem Patentanspruch 1, **dadurch gekennzeichnet, dass** der Kranausleger (12) als Steuereinheit und das Harvesteraggregat (14) als Arbeitseinheit verwendet werden und das Harvesteraggregat (14) ein Harvesterkopf (14') mit Vorschubwalzen (54, 58) ist und die Funktion des Harvesterkopfes (14') die Bewegung der Vorschubwalzen (54, 58) ist, die von dem Harvesteraggregat (14) ausgeführt wird, der erste Eingang (36) die Bewegung des Kranauslegers (12) parallel zum Baum ist und der zweite Eingang (38) eine Änderung der Stellung der Vorschubwalzen (54, 58) ist.

8. Verfahren gemäß einem der Patentansprüche 1 - 7, **dadurch gekennzeichnet, dass** im Speicher (32) eine vorgespeicherte erste Eingabe definiert ist, um die gewählte vorgespeicherte Funktion der Arbeitseinheit mitten in der Ausführung der Funktion zu unterbrechen.

9. Verfahren gemäß einem der Patentansprüche 1 - 8, **dadurch gekennzeichnet, dass** die ausgewählte voraufgezeichnete Funktion der Arbeitseinheit gleichzeitig mit der vom Bediener ausgeführten Funktion der Steuereinheit ausgeführt wird.

10. Verfahren gemäß einem der Patentansprüche 1 - 9, **dadurch gekennzeichnet, dass** die gewählte voraufgezeichnete Funktion der Arbeitseinheit, die durch den zweiten Eingang (38) initiiert wird, au tomatisch relativ zu mindestens einem Freiheitsgrad der von der Arbeitseinheit ermittelten und/oder geschätzten Lage ausgeführt wird.

11. Anordnung zur Steuerung einer Forstmaschine, bei der die Forstmaschine (100) mindestens umfasst
- einen mindestens zweiteiligen Kranausleger (12), vorzugsweise mit einem Hauptarm (12.1) und einem Schwenkarm (12.2),
- ein an dem Kranausleger (12) angebrachtes Harvesteraggregat (14) zum Fällen von Bäumen (16),
- in dem Harvesteraggregat (14) angeordnete erste Arbeitsvorrichtungen (18) zur Durchführung der Funktionen des Harvesteraggregats (14),
- zweite Arbeitsvorrichtungen (20), die in Verbindung mit dem Kranausleger (12) angeordnet sind, um die Funktionen des Kranauslegers (12) auszuführen,
- erste Steuermittel (22) zum Steuern der ersten Arbeitsvorrichtungen (18) und zweite Steuermittel (24) zum Steuern der zweiten Arbeitsvorrichtungen (20), um das Harvesteraggregat (14) und den Kranausleger (12) zu betreiben,
- erste Bestimmungsmittel (26) zum Messen und/oder Schätzen des Betriebszustands des Harvesteraggregats (14), die so angeordnet sind, dass sie ein erstes Bestimmungsergebnis erzeugen,
- zweite Bestimmungsmittel (28) zum Bestimmen und/oder Schätzen der Lage des Kranauslegers (12) relativ zu mindestens einem Freiheitsgrad, die so angeordnet sind, dass sie ein zweites Bestimmungsergebnis erzeugen,
- ein Steuersystem (30) zur Verwendung der von den ersten Steuermitteln (22) und den zweiten Steuermitteln (24) gebildeten Steuersignalen zur Steuerung der ersten Arbeitsvorrichtung (18) und der zweiten Arbeitsvorrichtungen (20),
wobei die Anordnung einen mit dem Steuersystem (30) verbundenen Speicher (32) umfasst sowie in dem Speicher (32) angeordnete Softwaremittel (34) zur Steuerung der ersten Arbeitsvorrichtungen (18) und der zweiten Arbeitsvorrichtungen (20) umfasst, wobei entweder der Kranausleger (12) oder das Harvesteraggregat (14) die Arbeitseinheit darstellen und entsprechend der oder das andere die Steuereinheit ist, und die Softwaremittel (34) eingerichtet sind:
- um im Speicher (32) mindestens eine vorgespeicherte Funktion der Arbeitseinheit zu definieren, die an einen ersten Eingang (36) für die Arbeitseinheit gebunden ist, und um die folgenden Funktionen a - d auszuführen:
a) um die vorgespeicherte Funktion der Arbeitseinheit aus dem Speicher (32) auf Grundlage der vom Bediener erzeugten ersten Eingabe automatisch auszuwählen und
b) eine zweite Eingabe (38) auf Grundlage des ermittelten momentanen Betriebszustands der Steuereinheit zu bilden, die ein bedingtes Kriterium zum Einleiten der ausgewählten voraufgezeichneten Funktion der Arbeitseinheit enthält,
c) um die ausgewählte voraufgezeichnete Funktion der Arbeitseinheit automatisch einzuleiten, wenn das Bedingungskriterium der zweiten Eingabe (38) erfüllt ist, und
d) um die ausgewählte voraufgezeichnete Funktion der Arbeitseinheit auszuführen, die durch die zweite Eingabe (38) initiiert wurde,
wobei die besagten Softwaremittel (34) eingerichtet sind, um die Funktionen a) - d) in Verbindung mit dem Baumfällereignis auszuführen und die ausgewählte voraufgezeichnete Funktion der Arbeitseinheit automatisch auszuführen, **dadurch gekennzeichnet, dass** das Kriterium eine Änderung des Betriebszustandes des Harvesteraggregats (14) ist.

12. Anordnung gemäß dem Patentanspruch 11, **dadurch gekennzeichnet, dass** das Harvestaggregat (14) ein Harvesterkopf (14') ist, der eine Trägheitsmesseinheit zur Ermittlung des Bewegungszustandes des zu fällenden Baumes (16) enthält.

13. Anordnung gemäß dem Patentanspruch 11 oder 12, **dadurch gekennzeichnet, dass** die Softwaremittel (34) eingerichtet sind, die gewählte, durch den zweiten Eingang (38) initiierte, voraufgezeichnete Funktion der Arbeitseinheit auf Grundlage des ermittelten und/oder geschätzten Freiheitsgrades der Arbeitseinheit automatisch auszuführen.

14. Forstmaschine, **dadurch gekennzeichnet, dass** die Forstmaschine (100) eine Anordnung (10) gemäß einem der Patentansprüche 11 - 13 umfasst.

## Revendications

1. Procédé de commande des fonctions d'une flèche ou d'un dispositif de traitement d'arbre fixé à la flèche, dans lequel procédé
- l'attitude ou l'état est déterminé et/ou estimé, par rapport à au moins un degré de liberté de la flèche (12),
- un état de fonctionnement instantané du dispositif de traitement d'arbre (14) est déterminé,
- le dispositif de traitement d'arbre (14) est commandé en utilisant les premiers moyens de commande,
- la flèche (12) est commandée en utilisant les seconds moyens de commande (24),
dans lequel procédé soit la flèche (12) soit le dispositif de traitement d'arbre (14) est une unité de manœuvre et en conséquence l'autre est une unité de commande, dans lequel procédé au moins une fonction pré-enregistrée de l'unité de manœuvre est définie dans une mémoire (32) et est liée à une première entrée (36) créée par un opérateur pour l'unité de manœuvre, et :
- la fonction pré-enregistrée de l'unité de manœuvre est sélectionnée automatiquement dans la mémoire (32) sur la base de la première entrée (36) créée par l'opérateur,
- une seconde entrée (38) est formée sur la base de l'état de fonctionnement instantané déterminé de l'unité de commande, qui comprend un critère conditionnel pour déclencher la fonction pré-enregistrée sélectionnée de l'unité de manœuvre,
- la fonction pré-enregistrée sélectionnée de l'unité de manœuvre est déclenchée automatiquement quand le critère conditionnel de la seconde entrée (38) est satisfait,
- la fonction pré-enregistrée sélectionnée de l'unité de manœuvre déclenchée par la seconde entrée (38) est exécutée,
où le procédé a lieu en liaison avec l'abattage d'un arbre et ladite fonction pré-enregistrée sélectionnée de l'unité de manœuvre est exécutée automatiquement, **caractérisé en ce que** le critère est un changement de l'état de fonctionnement du dispositif de traitement d'arbre (14).

2. Procédé selon la revendication 1, **caractérisé en ce que** ladite première entrée (36) est formée sur la base d'une ou plusieurs variables, lesquelles variables sont : un signal de commande des premiers moyens de commande (22), un signal de commande des seconds moyens de commande (24), une propriété définie de l'arbre (16), l'état de fonctionnement de l'unité de commande déterminé à ce moment.

3. Procédé selon la revendication 1 ou 2, **caractérisé en ce que** le dispositif de traitement d'arbre (14) est utilisé en tant qu'unité de commande et la flèche (12) en tant qu'unité de manœuvre.

4. Procédé selon la revendication 3, **caractérisé en ce que** le dispositif de traitement d'arbre (14) est une tête d'abattage (14') ayant des lames d'ébranchage (52, 56), des rouleaux d'alimentation (54, 58), un dispositif de coupe, de préférence une scie de coupe (60) et un rotateur (50), l'état de fonctionnement à déterminer pour la tête d'abattage (14') est un ou plusieurs des états suivants : mouvement ou attitude des lames d'ébranchage (52, 56), mouvement ou attitude des rouleaux d'alimentation (54, 58), attitude de la tête d'abattage (14'), rotation ou état de fonctionnement du dispositif de coupe, attitude du dispositif de coupe (60), emplacement en hauteur du dispositif de traitement d'arbre (14) par rapport à la base de la flèche, attitude ou état de fonctionnement du rotateur (50).

5. Procédé selon la revendication 3 ou 4, **caractérisé en ce que** ladite fonction de la flèche (12) est un trajet de mouvement effectué par la flèche (12) et/ou un changement dans l'attitude de la flèche (12) par rapport à au moins un degré de liberté et/ou l'augmentation ou la suppression de la tension de la flèche (12) par rapport à au moins un degré de liberté en chargeant les seconds dispositifs de manœuvre (20) appartenant à la flèche (12) sans bouger la flèche (12) ou le verrouillage des seconds dispositifs de manœuvre (20) de la flèche (12).

6. Procédé selon l'une quelconque des revendications 3 à 5, **caractérisé en ce que** le dispositif de traitement d'arbre (14) est une tête d'abattage (14') ayant une scie de coupe (60) et la seconde entrée (38) est la rotation de la scie de coupe (60) de la tête d'abattage (14'), le critère est la fin du sciage d'abattage et ladite fonction de la flèche (12) est le levage de la flèche (12) et son pliage vers la base de la flèche (12) .

7. Procédé selon la revendication 1, **caractérisé en ce que** la flèche (12) est utilisée en tant qu'unité de commande et le dispositif de traitement d'arbre (14) en tant qu'unité de manœuvre, et le dispositif de traitement d'arbre (14) est une tête d'abattage (14') ayant des rouleaux d'alimentation (54, 58) et la fonction de la tête d'abattage (14') est le mouvement des rouleaux d'alimentation (54, 58) effectué par le dispositif de traitement d'arbre (14), la première entrée (36) est le mouvement de la flèche (12) parallèle à l'arbre et la seconde entrée (38) est un changement de l'attitude des rouleaux d'alimentation (54, 58).

8. Procédé selon l'une quelconque des revendications 1 à 7, **caractérisé en ce qu'**une première entrée pré-enregistrée est définie dans la mémoire (32) pour interrompre la fonction pré-enregistrée sélectionnée de l'unité de manœuvre pendant l'exécution de la fonction.

9. Procédé selon l'une quelconque des revendications 1 à 8, **caractérisé en ce que** la fonction pré-enregistrée sélectionnée de l'unité de manœuvre est exécutée en même temps que la fonction de l'unité de commande exécutée par l'opérateur.

10. Procédé selon l'une quelconque des revendications 1 à 9, **caractérisé en ce que** la fonction pré-enregistrée sélectionnée de l'unité de manœuvre déclenchée par la seconde entrée (38) est exécutée automatiquement par rapport à au moins un degré de liberté de l'attitude déterminée et/ou estimée par l'unité de manœuvre.

11. Agencement pour commander une machine de foresterie, dans lequel la machine de foresterie (100) comprend au moins
- une flèche (12) en au moins deux parties, de préférence comprenant une flèche principale (12.1) et une flèche à pivot (12.2),
- un dispositif de traitement d'arbre (14) attaché à la flèche (12) pour abattre des arbres (16),
- des premiers dispositifs de manœuvre (18) situés dans le dispositif de traitement d'arbre (14) pour l'exécution des fonctions du dispositif de traitement d'arbre (14),
- des seconds dispositifs de manœuvre (20) situés en liaison avec la flèche (12) pour l'exécution des fonctions de la flèche (12),
- des premiers moyens de commande (22) pour commander les premiers dispositifs de manœuvre (18) et des seconds moyens de commande (24) pour commander les seconds dispositifs de manœuvre (20) pour utiliser le dispositif de traitement d'arbre (14) et la flèche (12),
- des premiers moyens de détermination (26) pour mesurer et/ou estimer l'état de fonctionnement du dispositif de traitement d'arbre (14), agencés de sorte à produire un premier résultat déterminé,
- des seconds moyens de détermination (28) pour déterminer et/ou estimer l'attitude de la flèche (12) par rapport à au moins un degré de liberté, agencés de sorte à produire un second résultat déterminé,
- un système de commande (30) pour utiliser les signaux de commande formés par les premiers moyens de commande (22) et les seconds moyens de commande (24) pour commander les premiers dispositifs de manœuvre (18) et les seconds dispositifs de manœuvre (20),
où l'agencement comprend une mémoire (32) reliée au système de commande (30) et des moyens logiciels (34) agencés dans la mémoire (32) pour commander les premiers dispositifs de manœuvre (18) et les seconds dispositifs de manœuvre (20), dans lequel agencement soit la flèche (12) soit le dispositif de traitement d'arbre (14) est l'unité de manœuvre et en conséquence l'autre est l'unité de commande et les moyens logiciels (34) sont agencés de sorte :
- à définir dans la mémoire (32) au moins une fonction pré-enregistrée de l'unité de manœuvre, qui est liée à une première entrée (36) pour l'unité de manœuvre et à exécuter les fonctions suivantes de a) à d) :
a) à sélectionner automatiquement la fonction pré-enregistrée de l'unité de manœuvre de la mémoire (32) sur la base de la première entrée créée par l'opérateur et
b) à former, sur la base de l'état de fonctionnement instantané de l'unité de commande, une seconde entrée (38), qui comprend un critère conditionnel pour déclencher la fonction pré-enregistrée sélectionnée de l'unité de manœuvre,
c) à déclencher automatiquement la fonction pré-enregistrée sélectionnée de l'unité manœuvre quand le critère conditionnel de la seconde entrée (38) est satisfait, et
d) à exécuter la fonction pré-enregistrée sélectionnée de l'unité de manœuvre déclenchée par la seconde entrée (38),
où lesdits moyens logiciels (34) sont agencés de sorte à exécuter lesdites fonctions a) à d) en liaison avec l'abattage d'un arbre et à exécuter automatiquement la fonction pré-enregistrée sélectionnée de l'unité de manœuvre, **caractérisé en ce que** le critère est un changement de l'état de fonctionnement du dispositif de traitement d'arbre (14).

12. Agencement selon la revendication 11, **caractérisé en ce que** le dispositif de traitement d'arbre (14) est une tête d'abattage (14') qui comprend une unité de mesure d'inertie pour déterminer l'état de mouvement de l'arbre (16) en train d'être abattu.

13. Agencement selon la revendication 11 ou 12, **caractérisé en ce que** les moyens logiciels (34) sont agencés de sorte à exécuter automatiquement la fonction pré-enregistrée sélectionnée de l'unité de manœuvre déclenchée par la seconde entrée (38) sur la base du degré de liberté déterminé et/ou estimé de l'unité de manœuvre.

14. Machine de foresterie, **caractérisée en ce que** la machine de foresterie (100) comprend un agencement (10) selon l'une quelconque des revendications 11 à 13.
